Europäisches Patentamt

European Patent Office

Office européen des brevets

(19)

(11) Publication number: **0 239 987 B1**

(12) **EUROPEAN PATENT SPECIFICATION**

(45) Date of publication of patent specification: **20.05.92**

(51) Int. Cl.5: **B60R 25/08**, B60R 25/02

(21) Application number: **87104735.3**

(22) Date of filing: **31.03.87**

(54) Anti-theft system for vehicles.

(30) Priority: **02.04.86 IL 78404**
**17.02.87 IL 81600**

(43) Date of publication of application:
**07.10.87 Bulletin 87/41**

(45) Publication of the grant of the patent:
**20.05.92 Bulletin 92/21**

(84) Designated Contracting States:
**CH DE ES FR GB IT LI**

(56) References cited:
**EP-A- 0 085 383**
**WO-A-85/04630**
**DE-C- 834 189**

(73) Proprietor: **Baruch, Yehuda**
**12, Kaplansky Street**
**Rishon Le'Zion(IL)**

(72) Inventor: **Baruch, Yehuda**
**12, Kaplansky Street**
**Rishon Le'Zion(IL)**

(74) Representative: **Prietsch, Reiner, Dipl.-Ing. et al**
**Patentanwälte Dipl.-Ing. Dipl. oec. publ. D. Lewinsky, Dipl.-Ing. Reiner Prietsch Gotthardstrasse 81**
**W-8000 München 21(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

The invention relates to a system preventing the unauthorized operation of vehicles incorporating a hydraulic steering system comprising a hydraulic fluid tank, a pump, and a steering box, all being interconected by conduits.

EP-A1-0 085 383 discloses a system of that kind wherein the steering box further comprises a valve operable by electromagnetic means actuated by the ignition switch. Said valve blocks the hydraulic fluid ports of the steering box whenever the ignition switch is in its off-position and thus immobilizes the vehicle's steering. One disadvantage of the known system is that it requires a steering box of special construction so that it cannot easily be incorporated into an existing steering system. Another drawback resides in the fact that the known anti-theft system is electrically operated so that it can be overmastered by cutting the conductors and suitably reconnecting them to a power supply like the vehicle's battery.

It is the object of the invention to provide an anti-theft system which can easily be incorporated into any existing hydraulic steering system and is difficult to overmaster.

This object is solved by a system of the kind referred to above and being characterized by a valve intermediate said steering box and said fluid tank, and comprising a housing provided with a first inlet port connected to said steering box, a second inlet port connected to said pump, and with an outlet port connected to said tank, said housing further being provided with an inner core member turnable within the housing via a key-operated lock between two positions, said inner core member being provided with a first bore being in register in the one position of the inner core member with the first inlet port and the outlet port, and being provided with a second bore connecting in the other position said second inlet port to the outlet port via a bypass passage provided in said housing.

Therefore the system according to the invention mainly consists of a mechanically operated valve of specific construction which can easily be inserted into any existing hydraulic steering system.

The system according to the invention may be improved further by adding to said valve constructional features preventing backflow of the brake fluid in the valve's blocking position when suitably connected to the vehicle's fluid operated brake.

The invention will now be described with reference to the annexed drawings in which:

Fig. 1 is a schematical illustration of the hydraulic system of a vehicle,

Fig. 2 illustrates a first embodiment of the invention, and

Fig. 3 illustrates a second embodiment.

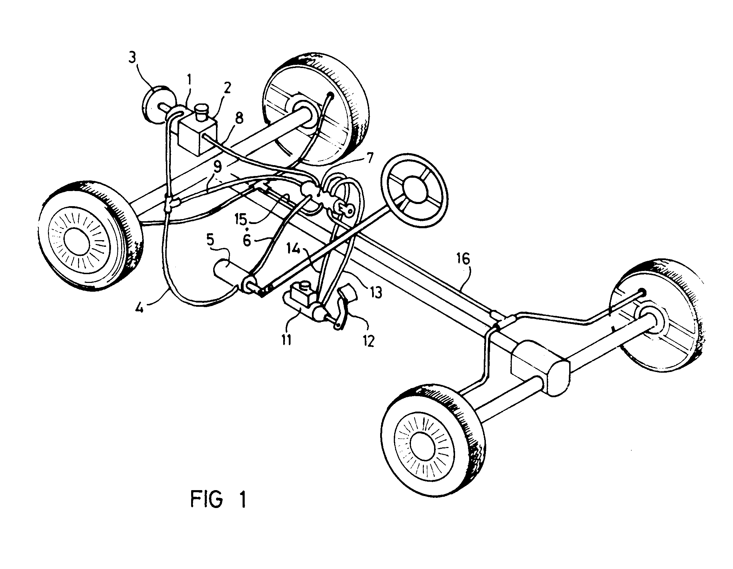

Fig. 1 illustrates two hydraulic systems of a vehicle, one which operates the steering and the second which operates the brakes.

The steering system comprises a pump 1 being operated by the vehicle's engine via a pulley 3, a hydraulic fluid tank 2, a feeding conduit 4 connecting steering box 5 with pump 1, a conduit 6 connecting steering box 5 to a valve 7, a conduit 8 connecting valve 7 with tank 2 while conduit 9 is connected to conduit 4.

The braking system comprises a pump 11 which is operated by a pedal 12, two feeding conduits 13 and 14 connecting pump 11 to said valve 7, and two conduits 15 and 16 leading from valve 7 to the vehicle's front and rear wheels.

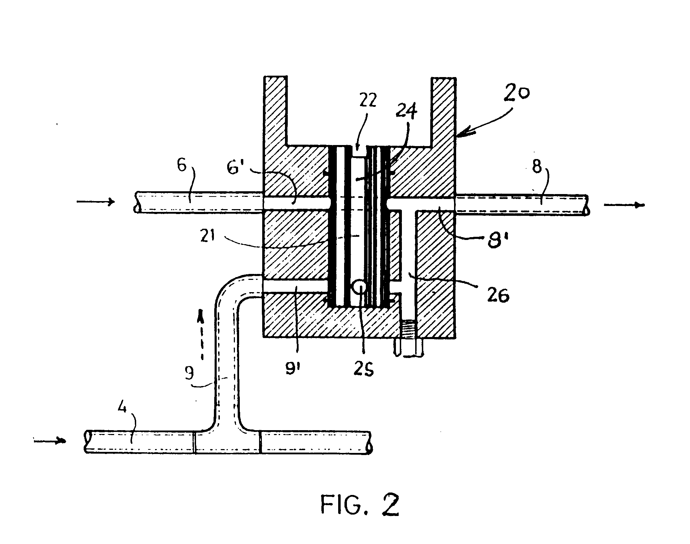

In its first embodiment shown in Fig. 2 valve 7 consists of a housing 20 and an inner core member 21 which is operated by a key at 22. Said housing 20 is provided with an inlet 6' and outlets 8' and 9 for the hydraulic fluid of the steering means.

Valve 7 which is shown in the normal working position functions in the following manner: The hydraulic fluid of the steering system is under constant pressure of pump 1 which is driven by pulley 3. The fluid is driven via conduit 4 into steering box 5, and via conduits 6 and 8 back into the hydraulic fluid tank 2. Intermediate conduits 6 and 8 is positioned valve 7. Said conduits 6 and 8 are connected to inlet 6' and outlet 8' respectively of housing 20. The fluid enters housing 20 via inlet 6' and passes through a bore 24 provided within inner core member 21, and out via outlet 8'. By turning the inner core member 21 through 90° by means of a key, the passage of the fluid through bore 24 will be closed thus immobilizing the steering wheel. As the pump is still activated by the engine the fluid is diverted to conduit 9 and now flows via inlet 9' through a bore 25 provided in the inner core member 21 perpendicular to bore 24 and through a passage 26 and outlet 8' back into tank 2, i.e. in a closed cycle which bypasses steering box 5.

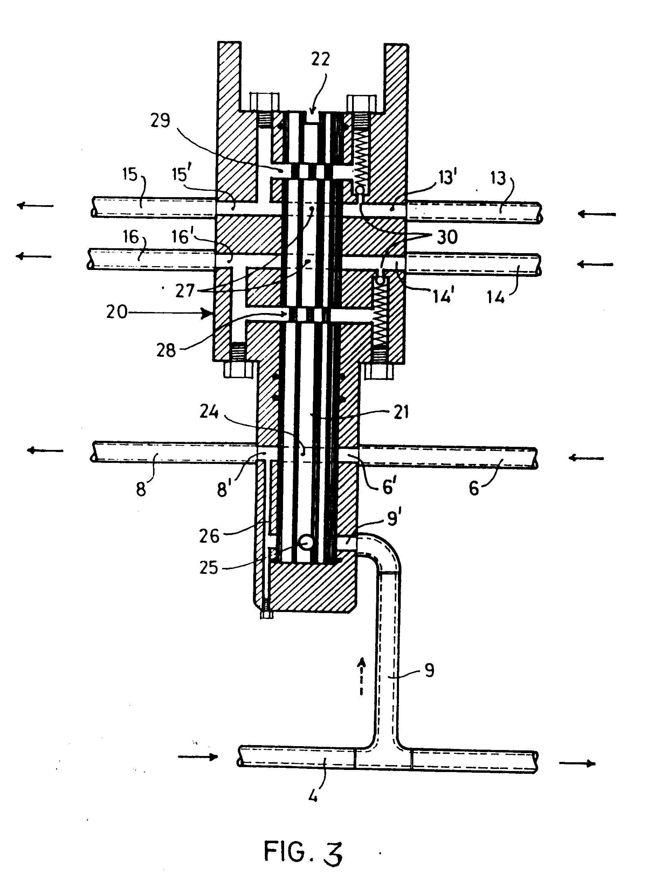

Fig. 3 shows a more elaborate embodiment wherein valve 7, of the construction and with the reference numerals illustrated in Fig. 2, is completed by elements being inserted into the vehicle's braking system.

The two conduits 13, 14 shown in Fig. 1 are connected to inlets 13' and 14' provided in the housing 20. In normal working position two bores 27 in inner core member 21 are in register with said inlets and with corresponding outlets 15' and 16' so that the braking fluid passes there through when the pump 11 (see Fig. 1) is activated. When the inner core member 21 is turned through 90° said passage is closed. Then, upon activation of the brake the braking fluid is diverted to bypasses 28, 29 and the pressure is applied via conduits 15 and 16 on the brakes. The release of pedal 12 normally results in a backflow of the fluid into the pump but as the passage via bores 27 is closed and the bypasses 28 and 29 are provided with a oneway valve 30 no such backflow is possible. Thus the brakes remain in the braking position, practically immobilizing the vehicle.

In vehicles which are not equipped with a hydraulic steering system or in case where it is not possible for any reason to instal said valve, it is within the scope of the invention to devide the valve into two parts one for each system.

## Claims

1. A system preventing the unauthorized operation of vehicles incorporating a hydraulic steering system comprising a hydraulic fluid tank (2), a pump (1), and a steering box (5), all being interconnected by conduits, characterized by a valve (7) intermediate said steering box (5) and said fluid tank (2), and comprising a housing (20) provided with a first inlet port (6') connected to said steering box, a second inlet port (9') connected to said pump, and with an outlet port (8') connected to said tank (2), said housing further being provided with an inner core member (21) turnable within the housing (20) via a key-operated lock between two positions, said inner core member being provided with a first bore (24) being in register in the one position of the inner core member with the first inlet port and the outlet port, and being provided with a second bore (25) connecting in the other position said second inlet port to the outlet port via a bypass passage (26) provided in said housing.

2. A system as claimed in claim 1, characterized in that the housing is further provided with at least one further inlet port (13', 14') connected to the brake pedal operated pump (11) and at least one further outlet port (15', 16') connected to the vehicle's fluid operated brake, in that the inner core member (21) is provided with at least one further bore (27) being in register in said one position of the inner core member with said further inlet and outlet ports, said further inlet ports (13', 14') being connected to said further outlet ports (15', 16') via respective bypass passages (28, 29) containing one way valve means (30) preventing backflow of the brake fluid in said other position of the inner core member.

## Revendications

1. Système empêchant l'utilisation non autorisée de véhicules comportant un système de direction hydraulique comprenant un réservoir de fluide hydraulique (2), une pompe (1), et un boîtier de direction (5), tous étant reliés par des conduites, caractérisé par une soupape (7) entre ledit boîtier de direction (5) et ledit réservoir de fluide (2), et comportant un corps (20) pourvu d'un premier orifice d'entrée (6') relié audit boîtier de direction, d'un deuxième orifice d'entrée (9') relié à ladite pompe, et d'un orifice de sortie (8') relié audit réservoir (2), ledit corps étant en outre pourvu d'un élément central interne (21) pouvant tourner entre deux positions à l'intérieur du corps (20) au moyen d'un verrou actionné par clé, ledit élément central interne étant pourvu d'un premier alésage (24) qui est en alignement dans une position de l'élément central interne avec le premier orifice d'entrée et l'orifice de sortie, et étant pourvu d'un deuxième alésage (25) reliant dans l'autre position ledit deuxième orifice d'entrée à l'orifice de sortie en passant par un passage de dérivation (26) prévu dans ledit corps.

2. Système selon la revendication 1, caractérisé en ce que le corps est en outre pourvu d'au moins un autre orifice d'entrée (13', 14') relié à la pompe (11) actionnée par la pédale de frein et d'au moins un autre orifice de sortie (15', 16') relié aux freins hydrauliques du véhicule, en ce que l'élément central interne (21) est pourvu d'au moins un autre alésage (27) qui est en alignement dans ladite position de l'élément central interne avec lesdits autres orifices d'entrée et de sortie, lesdits autres orifices d'entrée (13', 14') étant reliés aux dits autres orifices de sortie (15', 16') par des passages de dérivation respectifs (28, 29) contenant des moyens de clapet anti-retour (30) empêchant le retour du fluide freinage dans ladite autre position de l'élément central interne.

## Patentansprüche

1. Vorrichtung zur Verhinderung unbefugter Betätigung von Fahrzeugen, mit einer hydraulischen Lenkanlage mit durch Leitungen verbundenem Flüssigkeitstank (2), Pumpe (1) und Lenkgehäuse (5), dadurch gekennzeichnet, daß zwischen dem Lenkgehäuse (5) und dem Flüssigkeitstank (2) ein Ventil (7) zwischengeschaltet ist, das einen Behälter (20) mit einer an das Lenkgehäuse (5) angeschlossenen ersten Einlaßöffnung (6'), mit einer an die Pumpe (1) angeschlossenen zweiten Einlaßöffnung (9') und mit einer an den Tank (2) angeschlossenen Auslaßöffnung (8') besitzt, wobei der Ventilbehälter (20) ein in ihm mittels eines (bei 22') schlüsselbetätigbaren Schlosses zwischen zwei Stellungen drehbares Innenglied (21) enthält, das mit einer in dessen einen Stellung mit der ersten Einlaßöffnung (6') und der Auslaßöffnung (8') verbundenen ersten Bohrung (24) und mit einer in dessen anderen Stellung über einen in dem Ventilbehälter (20) vorgesehenen Nebenkanal (26) mit der zweiten Einlaßöffnung (9') verbundenen zweiten Bohrung (25) ausgestattet ist.

2. Vorrichtung nach Anspruch 1, dadurch gekennzeichnet, daß das Ventilgehäuse (20) mit mindestens einer weiteren, an die vom Bremspedal (12) betätigbare Pumpe (11) angeschlossenen Einlaßöffnung (13', 14') und wenigstens einer weiteren, an die durch Bremsflüssigkeit betätigte Bremse angeschlossenen Auslaßöffnung (15', 16') versehen ist und daß das Innenglied (21) mit mindestens einer weiteren, in dessen ersteren Stellung mit den weiteren Ein- und Auslaßöffnungen verbundenen Bohrung (27) ausgestattet ist, wobei die weiteren Einlaßöffnungen (13', 14') mit den weiteren Auslaßöffnungen (15', 16') über jeweilige Nebenkanäle (28, 29) verbunden sind, die Rückfluß der Bremsflüssigkeit in der anderen Stellung des Innengliedes (21) verhindernde Einwegventilorgane (30) enthalten.

FIG 1

FIG. 2

FIG. 3